# EUROPÄISCHE PATENTSCHRIFT

(11) **EP 3 374 297 B1**
(45) Veröffentlichungstag und Bekanntmachung des Hinweises auf die Patenterteilung: **12.08.2020**
(21) Anmeldenummer: 16790375.6
(22) Anmeldetag: 03.11.2016
(51) Int. Cl.: B65G 21/06

(54) **FÖRDERBAND**
CONVEYOR BELT
TRANSPORTEUR À BANDE

(30) Priorität: 12.11.2015 CH 16452015
(43) Veröffentlichungstag der Anmeldung: 19.09.2018
(73) Patentinhaber: Rotzinger AG, 4303 Kaiseraugst (CH)
(72) Erfinder: PHILIPP, Kurt, 79639 Grenzach-Wyhlen (DE); WEIGEL, Matthieu, 68500 Guebwiller (FR); MULLER, Christian, 68500 Berrwiller (FR)
(74) Vertreter: Braun, André jr.
(86) Internationale Anmeldenummer: PCT/EP2016/076528
(87) Internationale Veröffentlichungsnummer: WO 2017/080902

(56) Entgegenhaltungen:
- EP-A1- 0 114 155
- EP-A2- 1 329 399
- FR-A1- 2 663 309
- US-A1- 2013 062 167

## Beschreibung

Die Erfindung betrifft ein Förderband gemäss dem Oberbegriff des Anspruchs 1.

In der einschlägigen Fachsprache werden unter dem Begriff "Band" zum einen das in einem Bandförderer umlaufende Band und zum anderen eine gesamte Bandfördereinrichtung verstanden. Für den Zweck dieser Beschreibung wird der Begriff "Band" für Förderer verwendet, während für das im Förderer umlaufende eigentliche Band der Begriff "Gurt" verwendet wird.

Funktionsbänder sind Bänder, die neben der Förderfunktion noch weitere Funktionen erfüllen. Gleichzeitig sind Funktionsbänder Hauptbänder, d.h. breite Bänder die mit der Breite des Produktionsprozesses korrespondieren. Eine Form von Funktionsbändern sind sog. Regulierbänder, die zumeist von sehr kurzer Bauart im Bereich zwischen 100mm und 400mm Länge sind.

Regulierbänder sind sehr oft am Beginn eines Zufuhrsystems platziert und für die funktionsgerechte Übernahme der frisch produzierten Produktreihen eingesetzt. Das Zufuhrsystem übernimmt die frisch produzierten Produktreihen und transportiert diese taktgerecht zu den Verpackungsmaschinen. In der Biscuitproduktion orientiert sich die Hauptbandbreite an der Breite des Ofens. Bei Schokolade -oder Schokoriegelproduktionsanlagen orientiert sich die Breite der Hauptbänder an der Breite der Giessformen. Typische Hauptbandbreiten variieren somit von 600mm bis zum Teil über 2000mm.

Regulierbänder übernehmen die frisch produzierten nackten Produkte synchronisiert vom Produktionsband zumeist angeordnet als Reihen und geben dann diese Produktreihen an das Zufuhrsystem der Verpackungsanlage ab. Hierbei kann es sein, dass die Produktreihen auf dem Produktionsband mit intermittierender Geschwindigkeit ausgeformt und angedient werden. Ebenfalls können die Produktreihen als eng gruppierte Formation ausgeformt und angedient werden. Daraus ergibt sich Aufgabe und Funktion eines Regulierbands. Ein Regulierband übernimmt die Produktreihen oder Produktformationen synchronisiert vom Produktionsband. Hierbei kann die Andienung mit konstanter Geschwindigkeit erfolgen oder mit intermittierender Geschwindigkeit. Die Abgabe der Produktreihen an das Zufuhrsystem der Verpackungsanlage liegt zum einen in der verzugsfreien Überführung in eine höhere konstante Transportgeschwindigkeit und zum anderen in der zeitgerechten Abtaktung bzw. Separierung der Produktreihen an das Zufuhrsystem. Abtaktung und Separierung ist zumeist erforderlich bei Produktreihen, die in Formationen vom Produktionsband übernommen werden sollen.

In Kenntnis der Funktion und des Standorts solcher Regulierbänder ergibt sich die Problematik der Verschmutzung. Die Verschmutzung ist erhöht, weil die frisch produzierten Produkte auf diesen Regulierbändern dynamisch belastet werden. Das heisst, die Produktreihen werden beschleunigt und verzögert. Dabei kann Schlupf und somit Abrieb entstehen. Oft sind auch Brösel (Produktkrümel) oder fehlerhafte (deformierte) Produkte im Übergabebereich mit zu berücksichtigen. All dies führt dann zu erhöhter Verschmutzung und als Folge davon, zu einem erhöhten Reinigungsaufwand. Denn Verschmutzung ist die Ursache von allerlei Effizienzverlusten. Der Verlust kann zum einen die Reinigungszeit sein, in der nicht produziert werden kann und zum anderen sind Fehlfunktionen und Störungen die Ursache für erhöhten Ausschuss.

FR 2 663 309 offenbart ein Förderband nach dem Oberbegriff des Anspruchs 1.

Der Erfindung liegt die Aufgabe zugrunde, eine konstruktive Lösung eines Funktionsbandes vorzuschlagen, bei der die Verschmutzungsempfindlichkeit und der Reinigungsaufwand bzw. die Reinigungszeit minimiert ist.

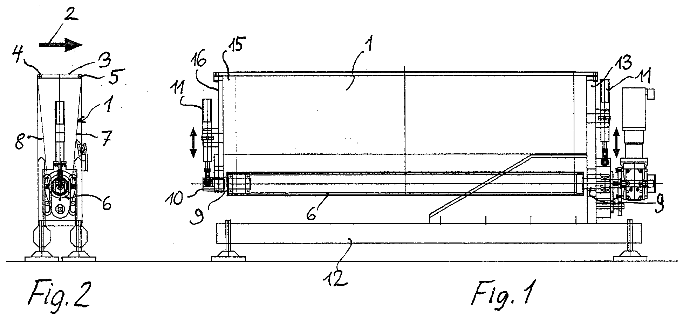

Erfindungsgemäss wird dies gelöst durch ein Förderband mit den kennzeichnenden Merkmalen des Anspruchs 1. Im Folgenden wird anhand der beiliegenden Zeichnungen ein Regulierband als bevorzugtes Ausführungsbeispiel der Erfindung beschrieben. Es zeigen
- Fig. 1: eine Seitenansicht eines Regulierbands nach der Erfindung,
- Fig. 2: eine stirnseitige Ansicht des in Fig. 1 gezeigten Bands

Das in den Zeichnungen gezeigte Regulierband besitzt gemäß der Erfindung einen endlos umlaufenden Gurt 1, der in Richtung des Pfeils 2 drei Streckenabschnitte durchläuft: einen oberen ebenen Abschnitt 3 zwischen einer aufgabeseitigen Umlenkrolle 4 und einer abgabeseitigen Umlenkrolle 5, einen von der abgabeseitigen Umlenkrolle nach unten zu einer Antriebstrommel 6 verlaufenden Abschnitt 7 und einen von der Antriebstrommel nach oben zur aufgabeseitigen Umlenkrolle verlaufenden Abschnitt 8.

Die Antriebstrommel besitzt eine Welle 9, die an ihren beiden Enden in Lagern 10 gelagert ist. Die Lager sind vertikal verschiebbar angeordnet und mittels servogesteuerten Getriebespindeln 11 vertikal bewegbar. Durch Abwärtsbewegung der Lager und damit der Antriebstrommel wird der Gurt gespannt, durch Aufwärtsbewegung gelockert und zwar soweit, dass er abgenommen werden kann. Durch die Servosteuerung der beidseitigen Gewindespindeln wird der Gurt automatisiert und definiert reproduzierbar gespannt und entspannt. werden.

Anstelle der Gewindespindeln wären auch andere Ausführungen möglich, wie z. B. pneumatische oder hydraulische Systeme. Diese sind jedoch im Lebensmittelbereich nicht erwünscht.

Der Antriebsmotor für die Antriebstrommel ist kraftschlüssig auf die Antriebswelle aufzentriert und wird zusammen mit den Lagern vertikal mitbewegt.

Für einen definierten und gesteuerten Geradeauslauf des Fördergurtes ist eine sog. Bandkantensteuerung üblich. Diese verhindert, dass der Gurt während der Produktion seitlich ablaufen kann. Der Gurt kann zum Beispiel durch die Belastung des Fördergutes oder durch zunehmende Verschmutzung ablaufen. Im Regelfall wird der Gurt zentriert durch eine technisch übliche Bombierung der Antriebstrommel. Dabei hat die Trommel im Zentrum des Bandes den grössten Durchmesser. Nach aussen hin reduziert sich deren Durchmesser geringfügig. Der Gurt orientiert sich dann im Betrieb geometrisch immer ins Zentrum, weil dort die grösste Gurtspannung vorhanden ist.

Durch Verschmutzung, externe Belastung oder Deformationen des Gurtes kann sich dieser Effekt jedoch abschwächen und zum Ablaufen des Gurtes führen. Die Position der Gurtkante quer zur Förderrichtung wird wie üblich durch eine mechanische oder sensorische Abtastung der Gurtkante erfasst. Driftet der Gurt nun quer zur Förderrichtung ab, so führt diese Veränderung der Position der Gurtkante zu einer definierten gegenläufigen Vertikalverschiebung der Lager. Dadurch wird die Antriebstrommel definiert schräg gestellt und wirkt durch diese Schrägstellung dem Ablauf des Fördergurtes entgegen. Durch diese gegenläufige vertikale Verschiebbarkeit der Antriebstrommel ist die Bandkantensteuerung sehr effizient, weil die Gurtspannung auf beiden Seiten des Gurtes simultan und direkt beeinflusst werden kann und sich somit der Gurtlauf sehr schnell und präzise steuern lässt.

Mit dieser Lösung sind die bei bekannten Regulierbändern typischerweise für Gurtspannung und Gurtführung aussen anliegenden Umlenkrollen, die ebenfalls der Verschmutzung ausgesetzt sind, nicht nötig.

Damit ein verschmutzter Gurt ohne Werkzeug gewechselt werden kann, ist die konstruktive Auslegung des Bandchassis auf einer Seite offen gehalten. Hierfür ist die Antriebsseite geschlossen und derart stabil ausgelegt, sodass auch Bandbreiten über 2000mm freitragend möglich sind. An einer Bodenplatte 12 ist eine vertikale Stirnplatte 13 befestigt, die zusätzlich mit Aussteifungen 14 verstärkt ist. An der Stirnplatte ist eine vertikale Strebe 15 befestigt, die sich im Inneren der Gurtsilhouette quer über die ganze Breite des Bands erstreckt. An der offenen Chassisseite ist eine Befestigungsplatte 16 angebracht, an der eines der Wellenlager der Antriebswelle, die vertikale Verschiebemechanik und die zugehörige Gewindespindel befestigt sind. Das zentrale Auslegungsmerkmal ist, wie erwähnt, dass die gesamte Mechanik auf der offenen Chassisseite innerhalb der Gurtsilhouette angeordnet ist.

Dadurch ist es möglich, den Gurt nach vorheriger Entspannung, ohne Werkzeug von der offenen Chassisseite abzuziehen. Die Remontage des Gurtes ist genauso einfach und ohne Werkzeug möglich. Die Gurtspannung kann danach wieder aktiviert werden, indem die beidseitig angeordneten vertikalen Verschiebeeinheiten die Antriebstrommel nach unten positionieren und dadurch der Gurt wieder reproduzierbar mit der exakt gleichen Spannung beaufschlagt wird.

Die für ein Regulierband beschriebene Lösung ist ohne Weiteres auch für andere Arten von Funktionsbändern und auch für unterschiedliche Formen von reinen Förderbändern einsetzbar.

## Patentansprüche

1. Förderband mit einem endlosen Gurt Z (1) Z und einer den Gurt antreibenden, im Inneren der Gurtsilhouette quer zur Gurtlaufrichtung angeordneten Antriebstrommel (6) mit einer Welle (9) , die beidseits des Bandes in Lagern (10) gelagert ist, wobei die Wellenlager (10) vertikal verschiebbar sind und Antriebsmittel (11) mit den Lagern Z (10) zu deren vertikalen Verschiebung verbunden sind,
**dadurch gekennzeichnet,**
**dass** das Förderband eine aufgabeseitige Umlenkrolle (4) und eine abgabeseitige Umlenkrolle (5) umfasst, wobei der endlos umlaufende Gurt (1) drei Streckenabschnitte durchläuft: einen oberen ebenen Abschnitt (3) zwischen der aufgabeseitigen Umlenkrolle (4) und der abgabeseitigen Umlenkrolle (5), einen von der abgabeseitigen Umlenkrolle (5) Z nach unten zur Antriebstrommel (6) verlaufenden Abschnitt (7) und einen von der Antriebstrommel (6) nach oben zur aufgabeseitigen Umlenkrolle (4) verlaufenden Abschnitt (8).

2. Förderband nach Anspruch 1, **gekennzeichnet durch** ein einseitig offenes Chassis, bei dem ein Wellenlager und dessen Verstellmechanismus an einer sich quer durch die Gurtsilhouette erstreckenden Strebe :(15) befestigt sind, derart, dass der Gurt auf dieser Seite abgenommen werden kann.

3. Förderband nach Anspruch 1, **gekennzeichnet durch** Mittel zum gegenläufigen vertikalen Verschieben der Lager (10) bei einem seitlichen Ablaufen des Gurts.

4. Förderband nach Anspruch 1, **dadurch gekennzeichnet, dass** ein Antriebsmotor für die Antriebstrommel kraftschlüssig auf der Welle (9) aufzentriert ist.

## Claims

1. Band conveyor comprising a continuous belt (1) and a drive drum (6) which drives the belt, is arranged in the interior of the belt silhouette transversely with respect to the belt running direction and comprises a shaft (9) which is mounted in bearings (10) on both sides of the band, the shaft bearings (10) being vertically movable and drive means (11) being connected to the bearings (10) in order to vertically move said bearings, **characterized in that** the band conveyor comprises a feed-side deflection roller (4) and a delivery-side deflection roller (5), the continuously circulating belt (1) passing through three path portions:
an upper planar portion (3) between the feed-side deflection roller (4) and the delivery-side deflection roller (5), a portion (7) extending from the delivery-side deflection roller (5) down to the drive drum (6), and a portion (8) extending from the drive drum (6) up to the feed-side deflection roller (4).

2. Band conveyor according to claim 1, **characterized by** a chassis which is open on one side and in which a shaft bearing and the adjustment mechanism thereof are fastened to a strut (15) which extends transversely through the belt silhouette, in such a way that the belt can be removed on this side.

3. Band conveyor according to claim 1, **characterized by** means for moving the bearings (10) vertically in opposite directions when the belt runs off to the side.

4. Band conveyor according to claim 1, **characterized in that** a drive motor for the drive drum is centered on the shaft (9) in a force-locking manner.

## Revendications

1. Bande transporteuse comportant une courroie sans fin (1) et un tambour d'entraînement entraînant la courroie et disposé à l'intérieur du contour de la courroie transversalement à la direction de défilement de la courroie, lequel tambour d'entraînement (6) comporte un arbre (9) qui est monté sur des paliers des deux côtés de la bande, les paliers d'arbre (10) étant déplaçables verticalement, et des moyens d'entraînement (11) étant reliés aux paliers (10) pour leur déplacement vertical,
**caractérisée**
**en ce que** la bande transporteuse comprend une poulie de renvoi côté charge (4) et une poulie de renvoi côté décharge (5), la courroie tournant sans fin passant par trois sections de trajet :
une section plane supérieure (3) entre la poulie de renvoi côté charge (4) et la poulie de renvoi côté décharge (5), une section (7) s'étendant de la poulie de renvoi côté décharge (5) vers le bas jusqu'au tambour d'entraînement (6) et une section (8) s'étendant du tambour d'entraînement (6) vers le haut jusqu'à la poulie de renvoi côté charge (4).

2. Bande transporteuse selon la revendication 1, **caractérisée par** un châssis ouvert d'un côté, dans lequel un palier d'arbre et son mécanisme de réglage sont fixés à une entretoise (15) s'étendant transversalement à travers le contour de la courroie, de telle sorte que la courroie peut être enlevée de ce côté.

3. Bande transporteuse selon la revendication 1, **caractérisée par** des moyens pour le déplacement vertical en sens contraire des paliers (10) lors d'une sortie latérale de la courroie.

4. Bande transporteuse selon la revendication 1, **caractérisée en ce qu'**un moteur d'entraînement destiné au tambour d'entraînement est centré à force sur l'arbre (9).
